(19) Europäisches Patentamt
European Patent Office
Office européen des brevets

(11) **EP 4 514 057 A1**

(12) **EUROPEAN PATENT APPLICATION**
published in accordance with Art. 153(4) EPC

(43) Date of publication:
**26.02.2025 Bulletin 2025/09**

(21) Application number: **23936808.7**

(22) Date of filing: **12.05.2023**

(51) International Patent Classification (IPC):
***H04W 76/38*** (2018.01)

(52) Cooperative Patent Classification (CPC):
**H04W 76/38**

(86) International application number:
**PCT/CN2023/094014**

(87) International publication number:
**WO 2024/234169 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CAO, Jianfei**
  **Dongguan, Guangdong 523860 (CN)**
• **DU, Zhongda**
  **Dongguan, Guangdong 523860 (CN)**

(74) Representative: **Taor, Simon Edward William et al
Venner Shipley LLP
200 Aldersgate
London EC1A 4HD (GB)**

(54) **WIRELESS COMMUNICATION METHOD, TERMINAL DEVICE, AND NETWORK DEVICE**

(57)    A method for wireless communication, a terminal device and a network device are provided. The method includes: releasing, by a terminal device, a resource associated with a first parameter, in response to a timer corresponding to a first timing advance group (TAG) expiring. The first parameter is associated with the first TAG, and the first parameter includes at least one of: a first transmission configuration indication (TCI) state, first spatial relation information, a first control resource set pool index, and a first uplink radio resource control (RRC) parameter.

200

TERMINAL DEVICE

FIRST NETWORK DEVICE

S201, FIRST CONFIGURATION INFORMATION, TO CONFIGURE AN ASSOCIATION BETWEEN FIRST TAG AND FIRST PARAMETER.

S210, WHEN TIMER CORRESPONDING TO FIRST TAG EXPIRES, RELEASE RESOURCE ASSOCIATED WITH FIRST PARAMETER

FIG. 7

EP 4 514 057 A1

**Description**

TECHNICAL FIELD

The embodiments of the present disclosure relate to the field of communication, and particularly, to a method for wireless communication, a terminal device, and a network device.

BACKGROUND

In some scenarios, one terminal device may be configured with one timing advance group (TAG), and one TAG corresponds to one time alignment (TA) timer. When the TA timer expires, the terminal device needs to release all reserved uplink and downlink resources on the serving cell. In the case where a serving cell is associated with multiple TAGs, how to release resources is an urgent problem to be solved.

SUMMARY

The present disclosure provides a method for wireless communication, a terminal device and a network device. When a timer corresponding to a first TAG expires, the terminal device may determine an associated first parameter according to the first TAG, and only release a resource associated with the first parameter.

In a first aspect, a method for wireless communication is provided. The method includes: releasing, by a terminal device, a resource associated with a first parameter, in response to a timer corresponding to a first timing advance group (TAG) expiring, where the first parameter is associated with the first TAG, and the first parameter includes at least one of: a first transmission configuration indication (TCI) state, first spatial relation information, a first control resource set pool index, and a first uplink radio resource control (RRC) parameter.

In a second aspect, a method for wireless communication is provided. The method includes: transmitting, by a network device, first configuration information to a terminal device, where the first configuration information is configured to configure a first association, and the first association is an association between a timing advance group TAG and at least one of following parameters: a transmission configuration indication TCI state, spatial relation information, a control resource set pool index, and an uplink radio resource control RRC parameter.

In a third aspect, a terminal device is provided. The terminal device is configured to implement the method in the first aspect or various implementations thereof. Specifically, the terminal device includes functional modules configured to implement the method in the first aspect or various implementations thereof.

In a fourth aspect, a network device is provided. The network device is configured to implement the method in the second aspect or various implementations thereof. Specifically, the network device includes functional modules configured to implement the method in the second aspect or various implementations thereof.

In a fifth aspect, a terminal device is provided. The terminal device includes: a processor and a memory. The memory is configured to store a computer program, and the processor is configured to invoke and execute the computer program stored in the memory to implement the method in the first aspect or various implementations thereof.

In a sixth aspect, a network device is provided. The network device includes: a processor and a memory. The memory is configured to store a computer program, and the processor is configured to invoke and execute the computer program stored in the memory to implement the method in the second aspect or various implementations thereof.

In a seventh aspect, a chip is provided. The chip is configured to implement the method in any one of the first aspect to the second aspect or various implementations thereof. Specifically, the chip includes: a processor configured to invoke and execute a computer program from a memory, to cause a device equipped with the chip to implement the method in any one of the first aspect to the second aspect or various implementations thereof.

In an eighth aspect, a computer-readable storage medium is provided. The computer-readable storage medium is configured to store a computer program, and the computer program causes a computer to implement the method in any one of the first aspect to the second aspect or various implementations thereof.

In a ninth aspect, a computer program product is provided. The computer program product includes a computer program instruction, and the computer program instruction causes a computer to implement the method in any one of the first aspect to the second aspect or various implementations thereof.

In a tenth aspect, a computer program is provided. The computer program, when executed on a computer, causes the computer to implement the method in any one of the first aspect to the second aspect or various implementations thereof.

Through the above technical solution, when a timer corresponding to a first TAG of a terminal device expires, the terminal device may determine a first parameter associated with the first TAG, and further release a resource associated with the first parameter, rather than releasing all reserved resources of a serving cell of the terminal device. This is conducive to ensuring a normal communication between the terminal device and other network nodes, and avoiding the terminal device from frequently initiating a random access process.

BRIEF DESCRIPTION OF THE DRAWINGS

FIG. 1 is a schematic diagram of a communication system architecture provided by embodiments of the present disclosure.

FIG. 2 is a format schematic diagram of a MAC CE for timing adjustment of a TA.

FIG. 3 is a format schematic diagram of a MAC CE indicating an absolute value of a TA.

FIG. 4 is a format schematic diagram of a MAC RAR signaling carrying a TA.

FIG. 5 is a schematic diagram of a timing advance between a downlink reception and an uplink transmission.

FIG. 6 is a scenario diagram of a multi-DCI scheduled multi-TRP based uplink transmission.

FIG. 7 is a schematic interaction diagram of a method for wireless communication provided according to the embodiments of the present disclosure.

FIG. 8 is a schematic block diagram of a terminal device provided according to the embodiments of the present disclosure.

FIG. 9 is a schematic block diagram of a network device provided according to the embodiments of the present disclosure.

FIG. 10 is a schematic block diagram of a communication device provided according to the embodiments of the present disclosure.

FIG. 11 is a schematic block diagram of a chip provided according to the embodiments of the present disclosure.

FIG. 12 is a schematic block diagram of a communication system provided according to the embodiments of the present disclosure.

DETAILED DESCRIPTION

The technical solutions in the embodiments of the present disclosure will be described below in combination with the drawings in the embodiments of the present disclosure. Obviously, the embodiments described are some of the embodiments of the present disclosure, instead of all of them. For the embodiments in the present disclosure, all the other embodiments obtained by those of ordinary skills in the art without any creative work are within the scope of protection of the present disclosure.

The technical solutions in the embodiments of the present disclosure may be applied to various communication systems, for example: global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, evolution system of NR system, LTE-based access to unlicensed spectrum (LTE-U) system, NR-based access to unlicensed spectrum (NR-U) system, non-terrestrial networks (NTN) system, universal mobile telecommunication system (UMTS), wireless local area networks (WLAN), wireless fidelity (WiFi), 5th-generation (5G) system or other communication systems.

Generally speaking, the number of connections supported by traditional communication systems is limited and easy to be achieved. However, with the development of communication technology, mobile communication systems will not only support traditional communications, but also support communications, such as device to device (D2D) communication, machine to machine (M2M) communication, machine type communication (MTC), vehicle to vehicle (V2V) communication, or vehicle to everything (V2X) communication. The embodiments of the present disclosure may also be applied to these communication systems.

Optionally, the communication system in the embodiments of the present disclosure may be applied to a carrier aggregation (CA) scenario, may also be applied to a dual connectivity (DC) scenario, and may further be applied to a standalone (SA) netting scenario.

Optionally, the communication system in the embodiments of the present disclosure can be applied to an unlicensed spectrum, where the unlicensed spectrum may also be considered as a shared spectrum; and alternatively, the communication system in the embodiments of the present disclosure may be applied to a licensed spectrum, where the licensed spectrum may also be considered as an unshared spectrum.

Various embodiments in the embodiments of the present disclosure are described in combination with a network device and a terminal device, where the terminal device may also be referred to as a user equipment (UE), an access terminal, a user unit, a user station, a mobile station, a mobile stage, a remote station, a remote terminal, a mobile device, a user terminal, a terminal, a wireless communication device, a user agent or a user apparatus, etc.

The terminal device may be a station (STA) in a WLAN, or may be a cellular phone, a cordless phone, a session initiation protocol (SIP) phone, a wireless local loop (WLL) station, a personal digital assistant (PDA) device, a handheld device or a computing device with a wireless communication function, or another processing device connected to a wireless modem, a vehicle-mounted device, a wearable device, a terminal device in a next generation communication system such as a NR network, or a terminal device in a future evolved public land mobile network (PLMN).

In the embodiments of the present disclosure, the terminal device may be deployed on land, including indoors or outdoors, handheld, wearable, or vehicle-mounted; it may also be deployed on the water (such as a ship); and it may further be deployed in the air (such as an airplane, a balloon, and a satellite).

In the embodiments of the present disclosure, the terminal device may be a mobile phone, a pad, a computer with a wireless transceiver function, a VR terminal device, an AR terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As an example but not a limitation, in the embodiments of the present disclosure, the terminal device may also be a wearable device. A wearable device may also be called a wearable smart device, which is a general term for a device that can be worn through intelligent design and development by applying wearable technology to daily wear, such as glasses, gloves, watches, clothing and shoes. A wearable device is a portable device that is worn directly on a body or integrated into clothes or accessories of a user. A wearable device is not only a hardware device, but also achieves powerful functions through software support, data interaction, and cloud interaction. In a broad sense, a wearable smart device includes a full-featured and large-sized device that can achieve complete or partial functions without relying on a smart phone, for example, smart watches or smart glasses, and it also includes a device that only focuses on a certain type of application function and needs to be used in cooperation with another device such as a smart phone, for example, various smart bracelets and smart jewelry for vital sign monitoring.

In the embodiments of the present disclosure, the network device may be a device for communicating with a mobile device. The network device may be an access point (AP) in WLAN, a base transceiver station (BTS) in GSM or CDMA, or a node B (NB) in WCDMA. The network device may be a device in LTE, such as an evolutional node B (eNB or eNodeB), a relay station or an AP, a vehicle-mounted device, a wearable device, or may be a network device (gNB) in an NR network, a network device in a future evolved public land mobile network (PLMN) network, or a network device in an NTN network.

As an example and not a limitation, in the embodiments of the present disclosure, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may be a base station set up in a location such as land or water.

In the embodiments of the present disclosure, the network device may provide services for a cell, and the terminal device communicates with the network device through transmission resources (e.g., frequency domain resources, or called spectrum resources) used by the cell. The cell may be a cell corresponding to the network device (e.g., a base station), and the cell may belong to a macro base station or a base station corresponding to a small cell. The small cell here may include: a metro cell, a micro cell, a pico cell, a femto cell, etc. These small cells have the characteristics of small coverage and low transmission power, and are suitable for providing high-speed data transmission services.

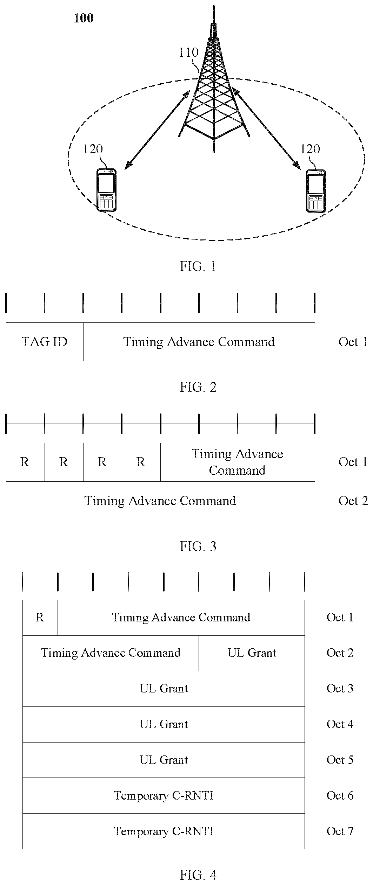

Exemplarily, a communication system 100 applied in the embodiments of the present disclosure is illustrated in FIG. 1. The communication system 100 may include a network device 110. The network device 110 may be a device in communication with a terminal device 120 (or referred to as a communication terminal or a terminal). The network device 110 may provide a communication coverage for a specific geographical region and may communicate with terminal devices located in the coverage region.

FIG. 1 exemplarily illustrates one network device and two terminal devices. Optionally, the communication system 100 may include multiple network devices and each network device may include other numbers of terminal devices within its coverage region, which is not limited in the embodiments of the present disclosure.

Optionally, the communication system 100 may also include other network entities such as a network controller and a mobile management entity, which is not limited in the embodiments of the present disclosure.

It may be understood that, a device with a communication function in a network/system in the embodiments of the present disclosure may be referred to as a communication device. Taking the communication system 100 illustrated in FIG. 1 as an example, the communication device may include the network device 110 and the terminal device 120 with a communication function, and the network device 110 and the terminal device 120 may be specific devices described above, which will not be repeated here. The communication device may also include other devices in the communication system 100, for example, other network entities such as a network controller and a mobile management entity, which are not limited in the embodiments of the present disclosure.

It may be understood that, the terms "system" and "network" are often used interchangeably herein. The term "and/or" herein is an association describing associated objects, indicating that there may be three relationships. For example, A and/or B may indicate the following three situations: A exists alone, A and B exist at the same time, and B exists alone. In addition, the symbol "/" in the present text generally indicates that context objects are in an "or" relationship.

It may be understood that, the expression "indicate" mentioned in the embodiments of the present disclosure may be a direct indication, an indirect indication, or an indication of an association. For example, the expression that A indicates B may refer to that A directly indicates B, for example, B may be obtained through A; it may also refer to that A indirectly indicates B, for example, A indicates C, and B may be obtained through C; and it may also refer to that A and B have an association.

In the illustration of the embodiments of the present disclosure, the term "correspond" may refer to a direct or an indirect correspondence between the two, or it may also refer to an association between the two, or it may further refer to a relationship between indicating and being indicated or between configuring and being configured.

In the embodiments of the present disclosure, "pre-define" may be implemented by pre-storing corresponding codes or tables or other means that may be used to indicate relevant information in a device (for example, including a terminal device and a network device) and the specific implementation is not limited in the present disclosure. For example, "pre-define" may refer to being defined in a protocol.

In the embodiments of the present disclosure, the "protocol" may refer to a standard protocol in the field of communication, for example, it may include an LTE protocol, an NR protocol, and related protocols applied to future communication systems, and the present disclosure is not limited in this regard.

In order to facilitate understanding of the technical solution of the embodiments of the present disclosure, timing advance (TA) related to the present disclosure will be explained.

In some scenarios, in a cell group (CG), a UE may be configured with up to 4 timing advance groups (TAGs). The TAG may be configured through radio resource control (RRC). Optionally, one CG may include multiple serving cells, and each serving cell is assigned with one timing advance group identity (TAG-Id). Each TAG has a time alignment timer, and the UE performs the time alignment timer. When the timer expires, the UE will consider that the TAG is out of uplink synchronization. Only when the network device adjusts a TA value through a media access control-control element (MAC CE) or another signaling during operation of the timer, the timer will be reset by the network device, and the UE will consider that the TAG is in uplink synchronization. For example, the duration of the time alignment timer is configured to be 500ms, that is, the network device needs to update (adjust) the TA value of the UE one time within 500ms, otherwise, the UE may consider it is out of uplink synchronization, and may possibly initiate a random access process when uplink data arrives.

In some scenarios, the TA of the UE may be calculated according to the following formula. The TA of the UE refers to an advance transmission which takes a first path of a downlink channel received by the UE, i.e., a first symbol of a time slot where the channel is located, as a downlink reference:

$$(N_{TA} + N_{TA,offset}) * T_C$$

In one CG, each serving cell may be pre-configured with one timing advance offset (TA offset), for example, configured through a high layer parameter (*n-TimingAdvanceOffset*), i.e., $N_{TA,offset}$ in the formula, where a TA adjustment amount ($N_{TA}$) is based on a pre-configured TA offset, $T_C$ is the minimum time unit in an NR system, and $T_C = 1 / (4096 * 480kHz)$. Timing adjustment for $N_{TA}$ may conducted through the MAC CE of the network device, that is, the current TA adjustment (new) is forward or backward in time based on the previous TA (old), and the calculation formula is as follows:

$$N_{(TA_{new})} = N_{(TA_{old})} + (T_A - 31) * 16 * 64 * / 2^{\mu}$$

A MAC CE format for timing adjustment of TA is as illustrated in FIG. 2, where the TA adjustment is to adjust $T_A$ minimum time units based on the previous TA, and a granularity of the TA adjustment is TAG.

In other scenarios, the network device may indicate a TA absolute value for an uplink transmission to the UE. For example, the network device may directly indicate the TA absolute value $N_{TA}$ through a MAC CE command as illustrated in FIG. 3. $N_{TA}$ has a value ranges from 0 to 3846, and has a length of 12 bits. Then, an indication range of the TA may be determined according to the formula $N_{TA} = T_A * 16 * 64 * 2^{\mu}$. Moreover, the MAC CE command may be applied to a primary timing advance group (PTAG) corresponding to a corresponding MAC entity, that is, the PTAG is defined to include a special cell (SpCell). Since the MAC CE is only applicable to the PTAG, it does not need to include a TAG-Id.

In some scenarios, during initial (cell) access of the UE, after transmitting a physical random access channel (PRACH) to the network device, the UE expects the network device to give the UE a TA indication through a media access control random access response (MAC RAR) within a certain time window. FIG. 4 illustrates a format of a MAC RAR signaling carrying a TA. The UE may obtain an initial TA absolute value of 12 bits based on the MAC RAR.

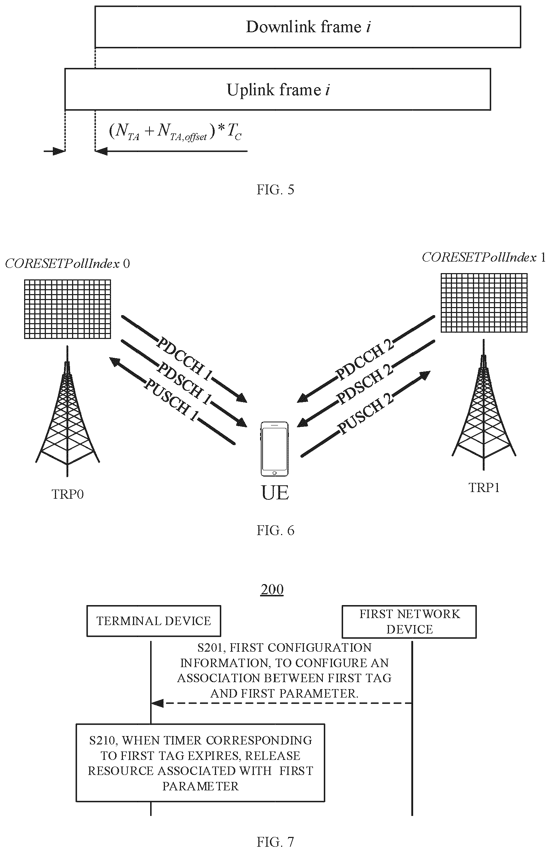

If the UE operates in a single TRP (sTRP) mode, an uplink channel or uplink signal will be transmitted at a reference point of the timing advance which is forward advance by $(N_{TA} + N_{TA,offset}) * T_C$ in time from a downlink reception time point, as illustrated in FIG. 5.

In some scenarios, repetition of a physical uplink control channel (PUCCH) or physical uplink shared channel (PUSCH) based on a multi-TRP (mTRP) is supported, so as to enhance the uplink coverage and transmission reliability. The UE needs to transmit a PUCCH or PUSCH carrying the same content to different TRPs. Repetition of multi-PUSCH based on single downlink control information (DCI) (sDCI) is also supported, the UE may use one TA to sequentially transmit the PUSCH to different TRPs. For repetition of a multi-PUSCH based on a multi-DCI (mDCI), due to the possibility of insufficient ideal backhaul as a connection between multiple TRPs, multiple TRPs each schedule the UE independently. Such an operation may cause a temporal overlap of PUSCH/PUCCH for different TRPs, and therefore, it is also necessary to support different TA updates or indications for different TRPs.

In some scenarios, a mechanism supporting that multiple antenna panels of the UE transmit a PUCCH/PUSCH to multiple TRPs at the same time is considered. But similarly, under the configuration of multi-uplink transmission antenna panels and multi-TRP reception, the UE still can use only one TA for advance transmission within one serving cell. Such a limitation should obviously be broken, that is, TRP-specific TA acquisition and indication should be supported.

For example, in a scenario of intra-cell mDCI-mTRP, TRP #1 and TRP #2 use the same PCI, as illustrated in FIG. 6. Each TRP may schedule a PDSCH/PUSCH transmission on the TRP through a respective DCI. It is worth being noted that in an operation of mDCI-mTRP, a control resource set (CORESET) is grouped by a RRC parameter control resource set pool index (CORESETPoolIndex). For example, CORESETs with a CORESETPoolIndex of "0" is grouped into one group, corresponding to one TRP, and CORESETs with a CORESETPoolIndex of "1" is grouped into another group, corresponding to another TRP. When the network device does not configure a CORESETPoolIndex for a CORESET, its default value is "0".

In a scenario of inter-cell mDCI-mTRP, TRP #1 in FIG. 6 may be understood as a reference TRP, i.e., a TRP that the UE accesses during initial access. The UE has achieved uplink and downlink synchronizations and has a dedicated physical cell identifier (PCI) #1. For other TRPs, since the network device may select one TRP from up to seven TRPs to additionally provide an uplink transmission service for the UE, these TRPs have different PCIs from a serving TRP and generally have not obtain uplink and downlink synchronizations with the UE in advance.

In some scenarios, a transmission solution supporting an mTRP PUSCH based on single-DCI (S-DCI) is considered. For example, a single frequency network (SFN) solution or a space division multiplexing (SDM) solution is adopted.

The SFN solution may refer to: the network device transmits uplink scheduling information from one TRP, and the scheduled UE transmits the same PUSCH to multiple TRPs on the same time frequency resource. The PUSCH received by the network device from the multiple TRPs may be decoded independently or first combined then decoded. Compared with independent decoding, the latter may obtain a lower PUSCH error probability, i.e., a lower block error rate (BLER).

The SDM solution may refer to: the network device transmits uplink scheduling information from one TRP, and the scheduled UE transmits different PUSCHs to multiple TRPs on the same or repeated time domain resource. For example, the UE transmits PUSCH #1 of Rank 1 to TRP #1 and transmits PUSCH #2 of Rank 2 to TRP #2. The benefit of doing this is that an uplink throughput may be increased.

In some scenarios, a concept of transmission configuration indicator (TCI) state is proposed for downlink spatial domain quasi-co-located (QCL) (beam) indication and transmission of QCL information in time-frequency domain. Specifically, a QCL relation may be simply described as a large-scale fading relation from one source reference signal to one target reference signal. For beam indication, after obtaining two QCL relations between a source reference signal and a target reference signal from the network device, the UE may use the receiving beam that is previously used for receiving the source reference signal, when receiving the target reference signal.

In some scenarios, an indication mechanism for TCI state is only applicable to downlink channels and signals. A concept of spatial relation is defined for an uplink beam indication to express a spatial relation between two reference signals.

In some scenarios, in order to provide a unified uplink and downlink beam management mechanism for the communication system, a concept of a unified TCI state is proposed based on the design of TCI state, and examples of important functions added are as follows.

1. Three kinds of unified TCI state modes are designed, where a joint TCI state may be applied to uplink and downlink channels and signals, a downlink (DL) TCI state is only applicable to downlink channels and signals, and an uplink (UL) TCI state is only applicable to uplink channels and signals.
2. Downlink channels (some physical downlink control channels (PDCCHs), physical downlink shared channel (PDSCH)) and signals (non-periodic channel state information reference signal (CSI-RS)) use the same downlink transmission beam, for example, use the DL TCI state or the joint TCI state.
3. Uplink channels (such as PUCCH and PUSCH) and signals (such as sounding reference signal (SRS)) use the same uplink transmission beam, for example, use the UL TCI state or the joint TCI state.
4. A unified TCI state may be dynamically updated and indicated by MAC CE and/or DCI.
5. It may be applied to a scenario of carrier aggregation, where beam indication on a single component carrier (CC) may be applied to multiple different CCs.
6. An uplink beam indication and an uplink power control parameter may be given at a time through the UL TCI state or the joint TCI state.
7. An inter-cell beam management function is supported.

In some scenarios, one serving cell (including single-TRP and multi-TRP scenarios) has only one TAG and one corresponding TA timer. When the TA timer expires, the UE needs to release all reserved uplink and downlink resources on the serving cell. In the case where the serving cell is configured with multiple TAGs, how to release resources is an urgent problem to be solved.

In order to facilitate understanding of the technical solution of the embodiments of the present disclosure, the technical solution of the present disclosure is described in detail below through specific embodiments. The above related technologies as optional solutions may be combined arbitrarily with the technical solution of the embodiments of the present disclosure, and they all fall within the protection scope of the embodiments of the present disclosure. The embodiments of the present disclosure include at least some of the following contents.

FIG. 7 is a schematic interaction diagram of a method 200 for wireless communication according to the embodiments of the present disclosure. As illustrated in FIG. 7, the method 200 includes at least some of the following contents.

S210, when a timer corresponding to a first timing advance group (TAG) expires, a terminal device releases a resource associated with a first parameter, and the first parameter is associated with the first TAG.

In some embodiments, the first parameter may include, but is not limited to, at least one of the following parameters: a first TCI state, first spatial relation information, a first control resource set pool index (CORESETPoolIndex), and a first uplink RRC parameter.

In some embodiments, the first parameter is associated with a first network node, such as a first TRP.

In some embodiments, a network device (such as a base station) may correspond to multiple network nodes. For example, uplink transmissions associated with different first parameters may be considered as being received by different network nodes. For another example, downlink transmissions associated with different first parameters may be considered as being transmitted from different network nodes.

In some embodiments, the timer corresponding to the first TAG may be a TimeAlignmentTimer. When the timer corresponding to the first TAG expires, the terminal device may consider that the first TAG is out of uplink synchronization, or in other words, the terminal device is out of uplink synchronization with the first network node.

In some embodiments, a serving cell of the terminal device is associated with at least two TAGs, and the first TAG is one of the at least two TAGs. Each TAG corresponds to one TAG ID, for example, the first TAG corresponds to a first TAG ID. A timer corresponding to the first TAG may refer to a timer corresponding to the first TAG ID, and an association between the first parameter and the first TAG may refer to an association between the first TAG ID and the first parameter.

In some embodiments, the first TAG is a PTAG in the at least two TAGs.

In some embodiments of the present disclosure, S210 includes the following: when the timer corresponding to the first TAG expires and a timer corresponding to a TAG other than the first TAG in the at least two TAGs does not expire, the terminal device only releases a resource associated with the first parameter associated with the first TAG.

That is, when only the timer corresponding to the first TAG expires and timers corresponding to other TAGs do not expire, it indicates that the terminal device is out of uplink synchronization with the first network node, and is not out of uplink synchronization with other network nodes. Therefore, the terminal device may release uplink and downlink resources only for the first network node, without releasing all reserved uplink and downlink resources on the serving cell of the terminal device. For example, a resource is released according to the first parameter associated with the first TAG, for example, a resource associated with the first parameter is released.

In some embodiments, an association between the first TAG and the first parameter may be predefined, configured by the network device, or determined according to a preset rule.

For example, as illustrated in FIG. 7, the method further includes:
S201, the network device may transmit first configuration information to the terminal device, the first configuration information is configured to configure a first association, and the first association is an association between a TAG and at least one of the following parameters: a TCI state, spatial relation information, an CORESETPoolIndex, and an uplink RRC parameter. The first association includes an association between the first TCI state and the first parameter.

In some embodiments, the first configuration information is transmitted through at least one of the following signaling: a system message, a RRC signaling, a media access control (MAC) control element (CE), and downlink control information (DCI).

For example, a first TAG ID may be added to an information element (IE) of the first parameter to establish an association between the first TAG and the first parameter.

A manner for releasing the first parameter and the associated resource will be described in conjunction with the specific embodiments below.

Embodiment 1: The first parameter is a first TCI state.

Embodiment 1-1: The first TCI state includes a first uplink TCI (UL TCI) state or a first joint TCI state.

In some embodiments, when the timer corresponding to the first TAG expires, the terminal device may determine an UL/joint TCI state associated with the first TAG, and further determine an uplink resource associated with the UL/joint TCI state. Compared with the solution in which a TAG is associated with a CORESETPoolIndex, the advantage of using an association between the UL/joint TCI state and the TAG lies in that, the TAG may use a downlink reference signal contained in the UL/joint TCI state as a downlink synchronization time reference, that is, the terminal device may determine a transmission time of a physical random access channel (PRACH) according to a reception time of the downlink reference signal. In addition, in a millimeter wave frequency band, the UL/joint TCI state may provide a beam-level downlink synchronization and uplink synchronization, which is more accurate than a synchronization at a network node level (where one network node uses multiple beams for coverage, and the multiple beams experience different path transmission delays).

Embodiment 1-1-1: A PUCCH resource or PUCCH resource group that a first uplink TCI (UL TCI) state or a first joint TCI state is applied to is released.

In Embodiment 1-1-1, the first uplink TCI state or the first joint TCI state may indicate a reference signal (or beam) corresponding to an uplink channel that the first uplink TCI state or the first joint TCI state is applied to.

For example, when the timer corresponding to the first TAG expires, the terminal device may determine an uplink TCI state or joint TCI state associated with the first TAG, and further release the PUCCH resource or PUCCH resource group that the uplink TCI state or joint TCI state is applied to.

In some embodiments, the PUCCH resource or PUCCH resource group that the first TCI state is applied to is a first PUCCH resource or first PUCCH resource group, and when the timer corresponding to the first TAG expires, the first PUCCH resource or first PUCCH resource group may be released. That is, the resource associated with the first parameter includes the first PUCCH resource or first PUCCH resource group.

In some embodiments, the network device may configure (or indicate, activate) an uplink TCI state or a joint TCI state for a PUCCH resource or PUCCH resource group. In this case, it may be considered that the uplink TCI state or the joint TCI state may be applied to the PUCCH resource or PUCCH resource group. For example, the network device may configure through a RRC signaling a TCI state resource pool, for example, containing 128 UL/joint TCI states, then activate 8 TCI states or a combination of TCI states (including two joint/UL TCI states) through a MAC CE, and finally indicate a target TCI state in the TCI state activated by the MAC CE through a TCI state indication field (e.g., 3 bits) in DCI (e.g., DCI format 1_1/1_2). The UL/joint TCI state indicated by the DCI may be applied to all PUCCH resources/resource groups and PUSCH resources configured by the network device.

In some embodiments, the network device may configure (or indicate, activate) one uplink TCI state or joint TCI state for a PUCCH resource or PUCCH resource group (referred to as case 1), or may configure (or indicate, activate) multiple uplink TCI states or joint TCI states for a PUCCH resource or PUCCH resource group (referred to as case 2), for example, two uplink TCI states or two joint TCI states, or a combination of one uplink TCI state and one joint TCI state, and in this case, the terminal device transmits a PUCCH to multiple network nodes. Optionally, the terminal device may transmit a PUCCH to multiple network nodes using a time-division multiplexing (TDM) scheme (for example, a repetition of a PUCCH transmitted to different network nodes on different time domain resources), or using an SFN scheme or an SDM scheme.

For case 1: When the timer corresponding to the first TAG expires, the terminal device may determine an uplink TCI state or joint TCI state associated with the first TAG, and further release a PUCCH resource or PUCCH resource group that the uplink TCI state or joint TCI state is applied to.

For case 2: When the timer corresponding to the first TAG expires, as one implementation, a first PUCCH resource or first PUCCH resource group is released, because the terminal device has been out of uplink synchronization with the first network node, and a repetition of the PUCCH is impossible to be completed. For this reason, the first PUCCH resource or first PUCCH resource group may be released. As another implementation, the first PUCCH resource or first PUCCH resource group is not released, because the terminal device has been out of uplink synchronization with the first network node. When the terminal device has not been out of uplink synchronization with other network nodes, it may continue to transmit a PUCCH to other network devices.

For example, when the first TAG is associated with the first UL/joint TCI state, and the network device configures only a first UL/joint TCI state for the first PUCCH resource or first PUCCH resource group, it may be considered that the first PUCCH resource or first PUCCH resource group only corresponds to the first UL/joint TCI state, that is, the first PUCCH resource or first PUCCH resource group only uses the first UL/joint TCI state. In this case, when the timer corresponding to the first TAG expires, the terminal device may release the PUCCH resource or PUCCH resource group applying the first UL/joint TCI state, i.e., the first PUCCH resource or first PUCCH resource group. Alternatively, if the network device configures a first UL/joint TCI state and a second UL/joint TCI state for the first PUCCH resource or first PUCCH resource group, it may be considered that the first PUCCH resource or first PUCCH resource group corresponds to the first UL/joint TCI state and the second UL/joint TCI state, that is, the first PUCCH resource or first PUCCH resource group uses the first UL/joint TCI state and the second UL/joint TCI state. In this case, when the timer corresponding to the first TAG expires, the terminal device may release the PUCCH resource or PUCCH resource group that the first UL/joint TCI state is applied to, i.e., the first PUCCH resource or first PUCCH resource group.

Embodiment 1-1-2: An SRS resource or SRS resource set associated with a first uplink TCI (UL TCI) state or a first joint TCI state is released. For example, when the timer corresponding to the first TAG expires, the terminal device may determine an uplink TCI state or joint TCI state associated with the first TAG, and further release the SRS resource or SRS resource set associated with the uplink TCI state or joint TCI state.

In some embodiments, the first UL/joint TCI state is used to indicate an uplink signal, and the first SRS resource or first SRS resource set may be configured with the first UL/joint TCI state. Then, when the timer associated with the first TAG expires, the first SRS resource or first SRS resource set associated with the first UL/joint TCI state associated with the first TAG may be released, and the first SRS resource or first SRS resource set is used to track the uplink signal indicated by the first UL/joint TCI state.

In other words, the resource associated with the first parameter includes a sounding reference signal SRS resource or SRS resource set associated with the first TCI state, and the SRS resource or SRS resource set is configured to track the uplink signal indicated by the first TCI state.

In some embodiments, in the case where the first SRS resource or first SRS resource set is not configured with the UL/joint TCI state, that is, the first SRS resource or first SRS resource set is not configured to follow the uplink signal, when the timer corresponding to the first TAG expires, the terminal device may release the first SRS resource or first SRS resource set, or may not release the first SRS resource or first SRS resource set.

Embodiment 1-1-3: A pre-configured PUSCH resource that a first uplink TCI state (UL TCI) state or a first j oint TCI state is applied to is released.

For example, when the timer corresponding to the first TAG expires, the terminal device may determine an uplink TCI state or joint TCI state associated with the first TAG, and further release the pre-configured PUSCH resource associated with the uplink TCI state or joint TCI state.

In other words, the resource associated with the first parameter includes the pre-configured PUSCH resource that the first TCI state is applied to.

In some embodiments, the PUSCH resource may be dynamically scheduled, or may be semi-statically configured (also called pre-configured).

For a dynamically scheduled PUSCH resource, when the terminal device is out of uplink synchronization with one network node, the network device may avoid scheduling the terminal device to perform uplink transmission to the network node.

For a pre-configured PUSCH resource, the network device may configure (or indicate, activate) one or more UL/joint TCI states (for example, configure a first TCI state, a second TCI state, or the first TCI state and the second TCI state) for the PUSCH resource. Then, when the timer corresponding to the first TAG expires, the terminal device may determine the UL/joint TCI state associated with the first TAG, and further release the pre-configured PUSCH resource that the UL/joint TCI state is applied to.

Optionally, the pre-configured PUSCH resource includes a PUSCH resource carrying configured UL grants and/or a PUSCH resource for semi-persistent channel state information (CSI) reporting.

It may be understood that the above Embodiment 1-1-1, Embodiment 1-1-2 and Embodiment 1-1-3 may be implemented separately or jointly.

For example, when the timer corresponding to the first TAG expires, the terminal device may determine the UL/joint TCI state associated with the first TAG, and further release at least two of the PUCCH resource that the UL/joint TCI state is applied to, the SRS resource or SRS resource group associated with the UL/joint TCI state, and the pre-configured PUSCH resource that the UL/joint TCI state is applied to.

Optionally, in the Embodiment 1-1, the uplink resource associated with the first UL/joint TCI state may include at least one of: a PUCCH resource or PUCCH resource group that the first UL/joint TCI state is applied to, an SRS resource or SRS resource group associated with the first UL/joint TCI state, or a pre-configured PUSCH resource that the first UL/joint TCI state is applied to.

Embodiment 1-2: The first TCI state includes a first downlink TCI state or a first joint TCI state.

For example, when the timer corresponding to the first TAG expires, the terminal device may determine a DL/joint TCI state associated with the first TAG, and further release a downlink resource associated with the first DL/joint TCI state.

Embodiment 1-2-1: A hybrid automatic repeat request (HARQ) buffer corresponding to a PDSCH that the first DL/joint TCI state is applied to is released.

For example, when the timer corresponding to the first TAG expires, the terminal device may determine the DL/joint TCI state associated with the first TAG, and further release the HARQ buffer corresponding to the PDSCH that the DL/joint TCI state is applied to.

In other words, the resource associated with the first parameter includes the HARQ buffer corresponding to the PDSCH that the first DL/joint TCI state is applied to.

In some embodiments, the PDSCH may be transmitted through an HARQ process, and the HARQ process may correspond to one HARQ buffer at a receiving end for soft merging of received data. Then, when the timer corresponding to the first TAG expires, the terminal device is out of uplink synchronization with the first network node, and therefore, does not need to receive or process the PDSCH of the first network node. Therefore, the HARQ buffer corresponding to the PDSCH that the first DL/joint TCI state associated with the first TAG is applied to may be released.

Embodiment 1-2-2: A pre-configured PDSCH resource that the first DL/joint TCI state is applied to is released.

For example, when the timer corresponding to the first TAG expires, the terminal device may determine a DL/joint TCI state associated with the first TAG, and further release the pre-configured PDSCH resource that the DL/joint TCI state is applied to.

In other words, the resource associated with the first parameter includes the pre-configured PDSCH resource that the first DL/joint TCI state is applied to.

Optionally, the pre-configured PDSCH resource includes a configured downlink (DL) assignment.

In some embodiments, the network device may pre-configure the DL/joint TCI state for the configured DL assignment, and then may activate or indicate a target DL/joint TCI state. Then, when the timer corresponding to the first TAG expires, the terminal device determines that it is out of uplink synchronization with the first network node, and therefore, does not need to receive or process the PDSCH of the first network node. Therefore, the pre-configured PDSCH resource that the DL/joint TCI state associated with the first TAG is applied to may be released.

It may be understood that the above Embodiment 1-2-1 and Embodiment 1-2-2 may be implemented separately or jointly.

For example, when the timer corresponding to the first TAG expires, the terminal device may determine the DL/joint TCI state associated with the first TAG, and further release the HARQ buffer corresponding to the PDSCH that the DL/joint TCI state is applied to and the pre-configured PDSCH resource that the DL/joint TCI state is applied to.

Optionally, in Embodiment 1-1, the downlink resource associated with the first DL/joint TCI state may include at least one of: the HARQ buffer corresponding to the PDSCH that the first DL/joint TCI state is applied to, and the pre-configured PDSCH resource that the first DL/joint TCI state is applied to.

It may also be understood that the above Embodiment 1-1 and Embodiment 1-2 may be implemented separately or jointly.

For example, when the timer corresponding to the first TAG expires, the terminal device may determine the UL/joint TCI state and DL/joint TCI state associated with the first TAG, and further release the uplink resource associated with the UL/joint TCI state (for example, the uplink resources in Embodiment 1-1-1, Embodiment 1-1-2 and Embodiment 1-1-3) and the downlink resource associated with the DL/joint TCI state (for example, the downlink resources in Embodiment 1-2-1 and Embodiment 1-2-2).

Embodiment 2: The first parameter includes first spatial relation information.

Compared with the solution in which a TAG is associated with a CORESETPoolIndex, the advantage of using an association between spatial relation information and a TAG lies in that, the TAG may use a downlink reference signal contained in the spatial relation information as a downlink synchronization time reference, that is, the terminal device may determine a transmission time of a PRACH according to a reception time of the downlink reference signal. In addition, in a millimeter wave frequency band, the spatial relation information may provide a beam-level downlink synchronization and uplink synchronization, which is more accurate than a synchronization at a network node level (where one network node uses multiple beams for coverage, and the multiple beams experience different path transmission delays).

In some embodiments, spatial relation information may be configured for an uplink channel or uplink signal, that is, the spatial relation information has an association with the uplink channel or uplink signal.

For example, when the timer corresponding to the first TAG expires, the terminal device may determine spatial relation information associated with the first TAG, and further release an uplink resource associated with the spatial relation information.

Example 2-1: The first spatial relation information includes first PUCCH spatial relation information (PUCCH-SpatialRelationInfo).

In other words, the first TAG is associated with the first PUCCH-SpatialRelationInfo.

In this case, the terminal device may release a PUCCH resource or PUCCH resource group associated with the first PUCCH-SpatialRelationInfo.

In some embodiments, when the timer corresponding to the first TAG expires, the terminal device may determine a PUCCH-SpatialRelationInfo associated with the first TAG, and further release a PUCCH resource or PUCCH resource group associated with the PUCCH-SpatialRelationInfo. For example, a resource associated with the first parameter includes a second PUCCH resource or second PUCCH resource group, and the second PUCCH resource or second PUCCH resource group is the PUCCH resource or PUCCH resource group associated with the first PUCCH-SpatialRelationInfo.

In some embodiments, the network device may configure (or indicate, activate) PUCCH-SpatialRelationInfo for a PUCCH resource or PUCCH resource group. In this case, it may be considered that the PUCCH-SpatialRelationInfo may be applied to the PUCCH resource or PUCCH resource group.

In some embodiments, the network device may configure (or indicate, activate) one piece of PUCCH-SpatialRelationInfo for a PUCCH resource or PUCCH resource group (referred to as case 1), or may also configure (or indicate, activate) multiple pieces of PUCCH-SpatialRelationInfo, for example, two pieces of PUCCH-SpatialRelationInfo, for a PUCCH resource or PUCCH resource group (referred to as case 2), and in this case, the terminal device transmits a PUCCH to multiple network nodes. Optionally, the terminal device may transmit a PUCCH to multiple network nodes using a TDM scheme, or using an SFN scheme or an SDM scheme.

For case 1: When the timer corresponding to the first TAG expires, the terminal device may determine PUCCH-SpatialRelationInfo associated with the first TAG, and further release a PUCCH resource or PUCCH resource group associated with the PUCCH-SpatialRelationInfo.

For case 2: When the timer corresponding to the first TAG expires, as one implementation, a second PUCCH resource or second PUCCH resource group is released, that is because the terminal device has been out of uplink synchronization with the first network node, and a repetition of the PUCCH is impossible to be completed. For this reason, the second PUCCH resource or second PUCCH resource group may be released. As another implementation, the second PUCCH resource or second PUCCH resource group is not released, that is because the terminal device has been out of uplink synchronization with the first network node, and since the terminal device has not been out of uplink synchronization with other network nodes, the terminal device may continue to transmit a PUCCH to other network devices.

In Embodiment 2-2, the first spatial relation information includes first SRS spatial relation information (SRS-SpatialRelationInfo).

In other words, the first TAG is associated with the first SRS-SpatialRelationInfo.

Embodiment 2-2-1: An SRS resource or SRS resource group associated with the first SRS-SpatialRelationInfo is released.

For example, when the timer corresponding to the first TAG expires, the terminal device may determine an SRS-SpatialRelationInfo associated with the first TAG, and further release an SRS resource or SRS resource group associated with the SRS-SpatialRelationInfo.

For example, the resource associated with the first parameter includes a second SRS resource or SRS resource group, and the second SRS resource or SRS resource group is the SRS resource or SRS resource group associated with the first SRS-SpatialRelationInfo.

In some embodiments, the network device may configure one SRS-SpatialRelationInfo for the SRS resource or SRS resource group.

Embodiment 2-2-2: A pre-configured PUSCH resource associated with the first SRS-SpatialRelationInfo is released.

For example, when the timer corresponding to the first TAG expires, the terminal device may determine SRS-SpatialRelationInfo associated with the first TAG, and further release the pre-configured PUSCH resource associated with the SRS-SpatialRelationInfo.

In this embodiment, the network device may configure an SRS resource for a PUSCH resource, and may configure SRS-SpatialRelationInfo for the SRS resource. Therefore, the pre-configured PUSCH resource associated with the first SRS-SpatialRelationInfo may be the PUSCH resource associated with the SRS resource associated with the first SRS-SpatialRelationInfo.

In some embodiments, the PUSCH resource has a same antenna port as the associated SRS resource.

In some embodiments, the pre-configured PUSCH resource includes a PUSCH resource carrying configured UL grants and/or a PUSCH resource for semi-persistent channel state information (CSI) reporting.

It may be understood that the above Embodiment 2-1 and Embodiment 2-2 may be implemented separately or jointly.

For example, when the timer corresponding to the first TAG expires, the terminal device may determine the PUCCH-SpatialRelationInfo and SRS-SpatialRelationInfo associated with the first TAG, and further release the PUCCH resource associated with the PUCCH-SpatialRelationInfo and the uplink resource associated with the SRS-SpatialRelationInfo (for example, the uplink resources in Embodiment 2-2-1 and Embodiment 2-2-2).

Optionally, in Embodiment 3, the uplink resource associated with the first spatial relation information may include at least one of: a PUCCH resource or PUCCH resource group associated with the first PUCCH-SpatialRelationInfo, an SRS resource or SRS resource group associated with the first SRS-SpatialRelationInfo, and a pre-configured PUSCH resource associated with the first SRS-SpatialRelationInfo.

Embodiment 3: The first parameter includes a first uplink RRC parameter or a first CORESETPoolIndex.

A CORESETPoolIndex, as an exclusive index for a network node of a downlink control channel, may directly express an association between the network node and the TAG. Therefore, a resource may be released with aid of the association between the TAG and CORESETPoolIndex. In addition, compared with spatial relation information (only applicable to FR2), CORESETPoolIndex is applicable to two frequency bands, i.e., both FR1 and FR2, and may support multi-TA enhancement in all frequency bands.

In other words, the first TAG is associated with the first uplink RRC parameter or the first CORESETPoolIndex.

In some embodiments, when the timer corresponding to the first TAG expires, the terminal device may determine an uplink RRC parameter or CORESETPoolIndex associated with the first TAG, and further release a resource associated with the uplink RRC parameter or CORESETPoolIndex.

Embodiment 3-1: A PUCCH resource associated with the first uplink RRC parameter or the first CORESETPoolIndex is released.

For example, when the timer corresponding to the first TAG expires, the terminal device may determine an uplink RRC parameter or CORESETPoolIndex associated with the first TAG, and further release a PUCCH resource associated with the uplink RRC parameter or CORESETPoolIndex.

In other words, the resource associated with the first parameter includes the PUCCH resource associated with the first uplink RRC parameter or the first CORESETPoolIndex.

In some embodiments, the network device may configure (or indicate, activate) an uplink RRC parameter or CORESETPoolIndex for a PUCCH resource, that is, the uplink RRC parameter or CORESETPoolIndex has an association with the PUCCH resource.

Embodiment 3-2: A pre-configured PUSCH resource associated with a first uplink RRC parameter or a first CORESETPoolIndex is released.

For example, when the timer corresponding to the first TAG expires, the terminal device may determine an uplink RRC parameter or CORESETPoolIndex associated with the first TAG, and further release the pre-configured PUSCH resource associated with the uplink RRC parameter or CORESETPoolIndex.

In other words, the resource associated with the first parameter includes the pre-configured PUSCH resource associated with the first uplink RRC parameter or the first CORESETPoolIndex.

In some embodiments, the pre-configured PUSCH resource may include a Type 1 Configured Grant (CG) PUSCH resource and/or a Type 2 CG PUSCH resource.

In some embodiments, the pre-configured PUSCH resource associated with the first uplink RRC parameter or the first CORESETPoolIndex includes at least one of: Type 1 CG PUSCH resource associated with the first uplink RRC parameter or the first CORESETPoolIndex, Type 2 CG PUSCH resource associated with the first uplink RRC parameter or the first CORESETPoolIndex, or Type 2 CG PUSCH resource activated through DCI associated with the first uplink RRC parameter or the CORESETPoolIndex.

In some embodiments, the network device may configure (or indicate, activate) an uplink RRC parameter or CORESETPoolIndex for Type 1 CG PUSCH resource, that is, the uplink RRC parameter or CORESETPoolIndex has an association with the Type 1 CG PUSCH resource.

In some embodiments, the network device may configure (or indicate, activate) an uplink RRC parameter or CORESETPoolIndex for Type 2 CG PUSCH resource, that is, the uplink RRC parameter or CORESETPoolIndex has an association with the Type 2 CG PUSCH resource.

In some embodiments, Type 2 CG PUSCH is associated with a PDCCH. For example, the Type 2 CG PUSCH needs to be activated through the DCI in the PDCCH, and the PDCCH corresponds to one uplink RRC parameter or CORESETPoolIndex. When the timer corresponding to the first TAG expires, the terminal device may determine an uplink RRC parameter or CORESETPoolIndex associated with the first TAG, further determine DCI associated with the uplink RRC parameter or CORESETPoolIndex, and then release the Type 2 CG PUSCH activated through the DCI.

Embodiment 3-3: An SRS resource or SRS resource set associated with the first uplink RRC parameter or the first CORESETPoolIndex is released.

For example, when the timer corresponding to the first TAG expires, the terminal device may determine an uplink RRC parameter or CORESETPoolIndex associated with the first TAG, and further release the SRS resource or SRS resource set associated with the uplink RRC parameter or CORESETPoolIndex.

In other words, the resource associated with the first parameter includes the SRS resource or SRS resource set associated with the first uplink RRC parameter or the first CORESETPoolIndex.

In some embodiments, the SRS resource or SRS resource set associated with the first uplink RRC parameter or the first CORESETPoolIndex is a periodic or semi-persistent SRS resource, and the network device may configure an uplink RRC parameter or CORESETPoolIndex (or configure a second uplink RRC parameter or a second CORESETPoolIndex, i.e., a parameter corresponding to a second network device) for the periodic or semi-persistent SRS resource. Therefore, when the timer corresponding to the first TAG expires, the terminal device may determine an uplink RRC parameter or CORESETPoolIndex associated with the first TAG, and further release the SRS resource or SRS resource set associated with the uplink RRC parameter or CORESETPoolIndex (or an uplink RRC parameter or CORESETPoolIndex other than the above uplink RRC parameter or CORESETPoolIndex).

Embodiment 3-4: An HARQ buffer corresponding to a PDSCH scheduled by DCI associated with the first uplink RRC parameter or the first CORESETPoolIndex is released.

For example, when the timer corresponding to the first TAG expires, the terminal device may determine an uplink RRC parameter or CORESETPoolIndex associated with the first TAG, and further release the HARQ buffer corresponding to the PDSCH scheduled by DCI associated with the first uplink RRC parameter or the first CORESETPoolIndex.

In other words, the resource associated with the first parameter includes the HARQ buffer corresponding to the PDSCH scheduled by DCI associated with the first uplink RRC parameter or the first CORESETPoolIndex.

It should be noted that DCI is transmitted through a time-frequency resource, and an association between the DCI and the uplink RRC parameter or CORESETPoolIndex may be reflected as an association between the DCI and the time-frequency resource.

For example, DCI is transmitted through CORESET, each CORESET corresponds to one CORESETPoolIndex (if not configured, the default value is "0"), and then an association between a CORESETPoolIndex and DCI may be an association between the DCI and a CORESET that transmits the DCI.

In some embodiments, a PDSCH may be transmitted through a HARQ process, and the HARQ process may correspond to a HARQ buffer at a receiving end for soft merging of received data. Therefore, when the timer corresponding to the first TAG expires, the terminal device is out of uplink synchronization with the first network node, and therefore, does not need to receive or process the PDSCH of the first network node. Therefore, the HARQ buffer corresponding to the PDSCH scheduled by DCI associated with the uplink RRC parameter or CORESETPoolIndex associated with the first TAG may be released.

Embodiment 3-5: A pre-configured PDSCH resource associated with the first uplink RRC parameter or the first CORESETPoolIndex is released.

For example, when the timer corresponding to the first TAG expires, the terminal device may determine an uplink RRC parameter or CORESETPoolIndex associated with the first TAG, and further release the pre-configured PDSCH resource associated with the uplink RRC parameter or CORESETPoolIndex.

In other words, the resource associated with the first parameter includes the pre-configured PDSCH resource associated with the first uplink RRC parameter or the first CORESETPoolIndex.

Optionally, the pre-configured PDSCH resource includes a configured downlink (DL) assignment, such as Type 2 configured DL assignment.

In some embodiments, the network device may activate or deactivate a configured DL assignment through DCI, and the DCI corresponds to one uplink RRC parameter or CORESETPoolIndex. When the timer corresponding to the first TAG expires, the terminal device may determine that the terminal device is out of uplink synchronization with the first network node, and therefore, does not need to receive or process the PDSCH of the first network node. Therefore, the terminal device may determine an uplink RRC parameter or CORESETPoolIndex associated with the first TAG, further determine DCI associated with the uplink RRC parameter or CORESETPoolIndex, and then release the configured DL assignment activated by the DCI.

In some embodiments, the resource associated with the first uplink RRC parameter or the first CORESETPoolIndex may include at least one of: a PUCCH resource associated with the first uplink RRC parameter or the first CORESETPoolIndex, a pre-configured PUSCH resource associated with the first uplink RRC parameter or the first CORESETPoolIndex, an SRS resource or SRS resource set associated with the first uplink RRC parameter or the first CORESETPoolIndex, an HARQ buffer corresponding to a PDSCH scheduled by DCI associated with the first uplink RRC parameter or the first CORESETPoolIndex, and a pre-configured PDSCH resource associated with the first uplink RRC parameter or the first CORESETPoolIndex.

It may be understood that the above Embodiment 3-1 to Embodiment 3-5 may be implemented separately or jointly.

For example, when the timer corresponding to the first TAG expires, the terminal device may determine an uplink RRC parameter or CORESETPoolIndex associated with the first TAG, and further release the uplink resource and/or downlink resource associated with the uplink RRC parameter or CORESETPoolIndex. For example, at least two of the PUSCH resource associated with the uplink RRC parameter or CORESETPoolIndex, the pre-configured PUSCH resource, the SRS resource, the HARQ buffer corresponding to the PDSCH scheduled by DCI, and the pre-configured PDSCH resource are released.

It may also be understood that the above Embodiment 1, Embodiment 2, and Embodiment 3 may be implemented separately or jointly.

For example, when the timer corresponding to the first TAG expires, the terminal device may determine a TCI state and CORESETPoolIndex associated with the first TAG, and further release the uplink resource associated with the TCI state and/or the downlink resource associated with the TCI state, as well as the uplink resource associated with the CORESETPoolIndex and/or the downlink resource associated with the CORESETPoolIndex.

For another example, when the timer corresponding to the first TAG expires, the terminal device may determine a TCI state and spatial relation information associated with the first TAG, and further release the uplink resource associated with the TCI state and the downlink resource associated with the TCI state, as well as the uplink resource associated with the spatial relation information.

For further another example, when the timer corresponding to the first TAG expires, the terminal device may determine spatial relation information and CORESETPoolIndex associated with the first TAG, and further release the uplink resource associated with the CORESETPoolIndex and/or the downlink resource associated with the CORESETPoolIndex, as well as the uplink resource associated with the spatial relation information and the downlink resource associated with the spatial relation information.

For yet another example, when the timer corresponding to the first TAG expires, the terminal device may determine a TCI state, spatial relation information and CORESETPoolIndex associated with the first TAG, and further release the uplink resource associated with the TCI state and/or the downlink resource associated with the TCI state, the uplink resource associated with the CORESETPoolIndex and/or the downlink resource associated with the CORESETPoolIndex, and the uplink resource associated with the spatial relation information.

In summary, in the embodiments of the present disclosure, when a timer corresponding to one of at least two TAGs configured for a serving cell of a terminal device expires, the terminal device may determine a first parameter associated with a first TAG, and further release a resource associated with the first parameter, instead of releasing all reserved resources of the serving cell of the terminal device. This is conducive to ensuring a normal communication between the terminal device and other network nodes, and avoiding the terminal device from frequently initiating a random access process.

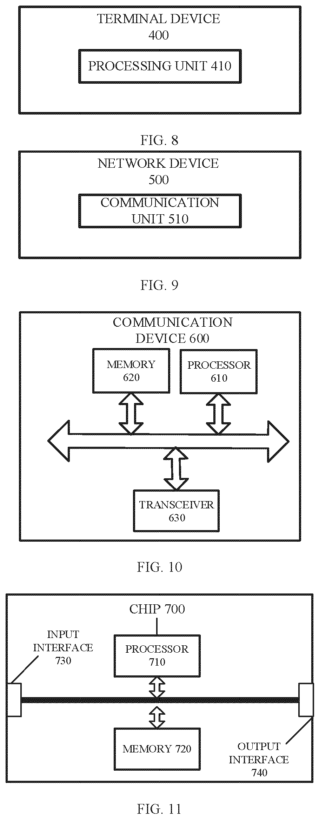

In the above text, the method embodiments of the present disclosure are described in detail in conjunction with FIG. 7. In the following, the device embodiments of the present disclosure will be described in detail in conjunction with FIG. 8 to FIG. 12. It may be understood that the device embodiments and method embodiments correspond to each other, and the method embodiments may be referred to for similar descriptions.

FIG. 8 illustrates a schematic block diagram of a terminal device 400 according to the embodiments of the present disclosure. As illustrated in FIG. 8, the terminal device 400 includes: a processing unit 410, configured to release a resource associated with a first parameter, when a timer corresponding to a first timing advance group (TAG) expires, where the first parameter is associated with the first TAG, and the first parameter includes at least one of: a first transmission configuration indication (TCI) state, first spatial relation information, a first control resource set pool index, and a first uplink radio resource control RRC parameter.

In some embodiments, the first TCI state includes a first uplink TCI state or a first joint TCI state.

In some embodiments, the resource associated with the first parameter includes a first physical uplink control channel (PUCCH) resource or first PUCCH resource group. The first PUCCH resource or first PUCCH resource group is a PUCCH resource or PUCCH resource group that the first TCI state is applied to.

In some embodiments, only the first TCI state is applied to the first PUCCH resource or first PUCCH resource group.

In some embodiments, the first PUCCH resource or first PUCCH resource group is a PUCCH resource or PUCCH resource group that the first TCI state and the second TCI state are applied to.

In some embodiments, the resource associated with the first parameter includes a sounding reference signal (SRS) resource or SRS resource set associated with the first TCI state, and the SRS resource or SRS resource set is configured to track an uplink signal indicated by the first TCI state.

In some embodiments, the resource associated with the first parameter includes a pre-configured physical uplink shared channel (PUSCH) resource that the first TCI state is applied to.

In some embodiments, the pre-configured PUSCH resource includes a PUSCH resource carrying a configured uplink grant and/or a PUSCH resource for semi-persistent channel state information (CSI) reporting.

In some embodiments, the first TCI state includes a first downlink TCI state or a first joint TCI state.

In some embodiments, the resource associated with the first parameter includes an HARQ buffer corresponding to a physical downlink shared channel (PDSCH) that the first TCI state is applied to.

In some embodiments, the resource associated with the first parameter includes a pre-configured PDSCH resource that the first TCI state is applied to.

In some embodiments, the pre-configured PDSCH resource includes a configured downlink assignment.

In some embodiments, the first spatial relation information includes first PUCCH spatial relation information.

In some embodiments, the resource associated with the first parameter includes a second PUCCH resource or second PUCCH resource group. The second PUCCH resource or second PUCCH resource group is a PUCCH resource or PUCCH resource group associated with the first PUCCH spatial relation information.

In some embodiments, the second PUCCH resource or second PUCCH resource group is only associated with the first PUCCH spatial relation information. Alternatively, the second PUCCH resource or second PUCCH resource group is associated with two PUCCH spatial relation information, and the two PUCCH spatial relation information includes the first PUCCH spatial relation information.

In some embodiments, the first spatial relation information includes first SRS spatial relation information.

In some embodiments, the resource associated with the first parameter includes an SRS resource or SRS resource set associated with the first SRS spatial relation information.

In some embodiments, the resource associated with the first parameter includes a pre-configured PUSCH resource associated with the SRS resource associated with the first SRS spatial relation information.

In some embodiments, the pre-configured PUSCH resource includes a PUSCH resource carrying a configured uplink grant and/or a PUSCH resource for semi-persistent channel state information (CSI) reporting.

In some embodiments, the resource associated with the first parameter includes a PUCCH resource associated with the first uplink RRC parameter or the first control resource set pool index.

In some embodiments, the resource associated with the first parameter includes a pre-configured PUSCH resource associated with the first uplink RRC parameter or the first control resource set pool index.

In some embodiments, the pre-configured PUSCH resource associated with the first uplink RRC parameter or the first control resource set pool index includes at least one of: a type 1 configured grant (CG) PUSCH resource associated with the first uplink RRC parameter or the first control resource set pool index, type 2 CG PUSCH resource associated with the first uplink RRC parameter or the first control resource set pool index, or type 2 CG PUSCH resource activated by downlink control information (DCI) associated with the first uplink RRC parameter or the first control resource set pool index.

In some embodiments, the resource associated with the first parameter includes an SRS resource or SRS resource set associated with the first uplink RRC parameter or the first control resource set pool index.

In some embodiments, the resource associated with the first parameter includes an HARQ buffer corresponding to a PDSCH scheduled by DCI associated with the first uplink RRC parameter or the first control resource set pool index.

In some embodiments, the resource associated with the first parameter includes a pre-configured PDSCH resource associated with the first uplink RRC parameter or the first control resource set pool index.

In some embodiments, the pre-configured PDSCH resource includes a type 2 configured downlink assignment.

In some embodiments, a serving cell of the terminal device is associated with at least two TAGs, and the first TAG is one in the at least two TAGs. When the timer corresponding to the first TAG expires, releasing, by the terminal device, the resource associated with the first parameter includes: when the timer corresponding to the first TAG expires and a timer corresponding to a TAG other than the first TAG in the at least two TAGs does not expire, releasing, by the terminal device, only a resource associated with the first parameter associated with the first TAG.

In some embodiments, the first TAG is a primary timing advance group (PTAG) in the at least two TAGs.

In some embodiments, the terminal device further includes: a communication unit, configured to receive first configuration information transmitted from a network device. The first configuration information is configured to configure a first association, and the first association is an association between a TAG and at least one of following parameters: a TCI state, spatial relation information, a control resource set pool index, and an uplink RRC parameter.

In some embodiments, the first association includes an association between a first TCI state and a first parameter. The first parameter includes at least one of: a first TCI state, first spatial relation information, a first control resource set pool index, and a first uplink RRC parameter.

In some embodiments, the first configuration information is transmitted via at least one of following signaling: a system message, a RRC signaling, a media access control (MAC) control element (CE), and DCI.

Optionally, in some embodiments, the above communication unit may be a communication interface or a transceiver, or an input/output interface of a communication chip or a system on chip. The above processing unit may be one or more processors.

It may be understood that, the terminal device 400 according to the embodiments of the present disclosure may correspond to the terminal device in the method embodiments of the present disclosure, and the above and other operations and/or functions of various units in the terminal device 400 are configured to respectively implement the corresponding processes of the terminal device in the method 200 illustrated in FIG. 7, which are not repeated herein for the sake of brevity.

FIG. 9 illustrates a schematic block diagram of a network device 500 according to the embodiments of the present disclosure. As illustrated in FIG. 9, the network device 500 includes a communication unit 510, configured to transmit first configuration information to a terminal device. The first configuration information is configured to configure a first association, and the first association is an association between a timing advance group (TAG) and at least one of following parameters: a transmission configuration indication (TCI) state, spatial relation information, a control resource set pool index, and an uplink radio resource control RRC parameter.

In some embodiments, the first association includes an association between a first TCI state and a first parameter. The first parameter includes at least one of: a first TCI state, first spatial relation information, a first control resource set pool index, and a first uplink RRC parameter.

In some embodiments, the first TCI state includes a first uplink TCI state or a first joint TCI state.

In some embodiments, the first TCI state includes a first downlink TCI state or a first joint TCI state.

In some embodiments, the first spatial relation information includes first physical uplink control channel (PUCCH) spatial relation information and/or first sounding reference signal (SRS) spatial relation information.

In some embodiments, the first configuration information is transmitted via at least one of following signaling: a system message, a RRC signaling, a media access control (MAC) control element (CE), and downlink control information (DCI).

Optionally, in some embodiments, the above communication unit may be a communication interface or a transceiver, or an input/output interface of a communication chip or a system on chip.

It may be understood that, the network device 500 according to the embodiments of the present disclosure may correspond to the network device in the method embodiments of the present disclosure, and the above and other operations and/or functions of various units in the network device 500 are configured to respectively implement the corresponding processes of the network device in the method 200 illustrated in FIG. 7, which are not repeated herein for the sake of brevity.

FIG. 10 is a schematic structural diagram of a communication device 600 provided in the embodiments of the present disclosure. The communication device 600 illustrated in FIG. 10 includes a processor 610, and the processor 610 may invoke and execute a computer program in a memory to implement the method in the embodiments of the present disclosure.

Optionally, as illustrated in FIG. 10, the communication device 600 may further include a memory 620. The processor 610 may invoke and execute a computer program in the memory 620 to implement the method in the embodiments of the present disclosure.

The memory 620 may be a separate device independent of the processor 610, or may be integrated in the processor 610.

Optionally, as illustrated in FIG. 10, the communication device 600 may further include a transceiver 630, and the processor 610 may control the transceiver 630 to communicate with other devices, specifically, to transmit information or data to other devices, or to receive information or data transmitted by other devices.

The transceiver 630 may include a transmitter and a receiver. The transceiver 630 may further include an antenna, and a number of the antenna may be one or more.

Optionally, the communication device 600 may specifically be a network device in the embodiments of the present disclosure, and the communication device 600 may implement the corresponding processes implemented by the network device in the methods in the embodiments of the present disclosure, which will not be repeated here for the sake of brevity.

Optionally, the communication device 600 may be a mobile terminal/terminal device in the embodiments of the present disclosure, and the communication device 600 may implement the corresponding processes implemented by the mobile terminal/terminal device in the methods of the embodiments of the present disclosure, which will not be repeated here for the sake of brevity.

FIG.11 is a schematic structural diagram of a chip in the embodiments of the present disclosure. The chip 700 illustrated in FIG. 11 includes a processor 710, and the processor 710 may invoke and execute a computer program in a memory to implement the method in the embodiments of the present disclosure.

Optionally, as illustrated in FIG. 11, the chip 700 may also include a memory 720. The processor 710 may invoke and execute a computer program in the memory 720 to implement the method in the embodiments of the present disclosure.

The memory 720 may be a separate device independent of the processor 710, or may be integrated in the processor 710.

Optionally, the chip 700 may also include an input interface 730. The processor 710 may control the input interface 730 to communicate with other devices or chips, and specifically, may obtain information or data transmitted by other devices or chips.

Optionally, the chip 700 may also include an output interface 740. The processor 710 may control the output interface 740 to communicate with other devices or chips, and specifically, may output information or data to other devices or chips.

Optionally, the chip may be applied to the network device in the embodiments of the present disclosure, and the chip may implement the corresponding processes implemented by the network device in the methods of the embodiments of the present disclosure, which will not be repeated here for the sake of brevity.

Optionally, the chip may be applied to the mobile terminal/terminal device in the embodiments of the present disclosure, and the chip may implement the corresponding processes implemented by the mobile terminal/terminal device in the methods of the embodiments of the present disclosure, which will not be repeated here for the sake of brevity.

It may be understood that, the chip mentioned in the embodiments of the present disclosure may also be referred to as a system-level chip, a system chip, a chip system or a system-on-chip chip, etc.

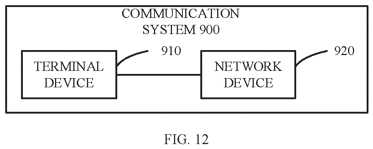

FIG. 12 is a schematic block diagram of a communication system 900 provided in the embodiments of the present disclosure. As illustrated in FIG. 12, the communication system 900 includes a terminal device 910 and a network device 920.

The terminal device 910 may be configured to implement the corresponding functions implemented by the terminal device in the above method, and the network device 920 may further be configured to implement the corresponding functions implemented by a first network device and/or a second network device in the above method, which will not be repeated here for the sake of brevity.

It may be understood that, the processor in the embodiments of the present disclosure may be an integrated circuit chip with signal processing capabilities. In the implementation process, each step of the above method embodiments may be implemented by an integrated logic circuit of hardware in the processor or an instruction in the form of software. The above processor may be a general processor, a digital signal processor (DSP), an application specific integrated circuit (ASIC), a field programmable gate array (FPGA) or other programmable logic devices, discrete gates or transistor logic devices, or discrete hardware components, which may implement or execute the methods, steps and logic block diagrams disclosed in the embodiments of the disclosure. The general processor may be a microprocessor or the processor may also be any conventional processor. The steps of the method disclosed in the embodiments of the present disclosure may be directly executed by a hardware decoding processor, or executed by a combination of hardware and software modules in a decoding processor. The software module may be located in a mature storage medium in the field, such as a random access memory, a flash memory, a read-only memory, a programmable read-only memory or an electrically erasable programmable memory, and a register. The storage medium is located in the memory, and the processor reads information in the memory and completes the steps of the above method in conjunction with its hardware.

It may be understood that, the memory in the embodiments of the present disclosure may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external buffer. By way of exemplary illustration and not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synch link DRAM (SLDRAM), and direct rambus RAM (DR RAM). It should be noted that the memory in the system and method described herein is intended to include, but is not limited to, these and any other suitable types of memory.

It may be understood that, the above memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), or a synch link DRAM (SLDRAM) and a direct rambus RAM (DR RAM). That is, the memory in the embodiments of the present disclosure is intended to include, but not limited to, these and any other suitable types of memory.

The embodiments of the present disclosure further provide a computer-readable storage medium, configured to store a computer program.

Optionally, the computer-readable storage medium may be applied to the network device in the embodiments of the present disclosure, and the computer program causes a computer to perform corresponding processes implemented by the network device in various methods of the embodiments of the present disclosure, which will not repeated here for the sake of brevity.

Optionally, the computer-readable storage medium may be applied to the mobile terminal/terminal device in the embodiments of the present disclosure, the computer program causes a computer to perform corresponding processes implemented by the mobile terminal/terminal device in various methods of the embodiments of the present disclosure, which will not repeated here for the sake of brevity.

The embodiments of the present disclosure further provide a computer program product, including a computer program instruction.

Optionally, the computer program product may be applied to the network device in the embodiments of the present disclosure, and the computer program instruction causes a computer to perform corresponding processes implemented by the first network device in various methods of the embodiments of the present disclosure, which will not repeated here for the sake of brevity.

Optionally, the computer program product may be applied to the mobile terminal/terminal device in the embodiments of the present disclosure, and the computer program instruction causes a computer to perform corresponding processes implemented by the mobile terminal/terminal device in various methods of the embodiments of the present disclosure, which will not repeated here for the sake of brevity.

The embodiments of the present disclosure further provide a computer program.

Optionally, the computer program may be applied to the network device in the embodiments of the present disclosure. When executed on a computer, the computer program causes the computer to perform corresponding processes implemented by the network device in various methods of the embodiments of the present disclosure, which will not repeated here for the sake of brevity.

Optionally, the computer program may be applied to the mobile terminal/terminal device in the embodiments of the present disclosure. When executed on a computer, the computer program causes the computer to perform corresponding processes implemented by the mobile terminal/terminal device in various methods of the embodiments of the present disclosure, which will not repeated here for the sake of brevity.

Those of ordinary skills in the art may recognize that each illustrative unit and algorithm step described in the embodiments disclosed herein may be obtained by combining electronic hardware or a combination of computer software and electronic hardware. Whether such functions are performed in a hardware manner or in a software manner is determined by the specific application and design constraints of the technical solution. Those skilled in the art may implement the described function using different methods for respective specific applications, but such implementation should not be considered as going beyond the scope of the present disclosure.

It may be clearly understood by those skilled in the art that, for the convenience and conciseness of description, the corresponding processes in the above method embodiments may be referred to for the specific operation processes of the systems, devices and units described above, which will not be repeated here.

In some embodiments provided in the present disclosure, it may be understood that the disclosed systems, devices and methods may be implemented in other manners. For example, the device embodiments described above are merely examples, and for example, the division of the units is merely a kind of logical functional division, and other division methods may exist in actual implementation. For example, multiple units or assemblies may be combined or integrated into another system, or some features may be ignored or not performed. On the other hand, the coupling or direct coupling or communication connection between each other illustrated or discussed may be an indirect coupling or communication connection through some interfaces, devices or units, and may be electrical, mechanical or other forms.

The units described as separate components may or may not be physically separate, and the components illustrated as units may or may not be physical units, i.e., they may be located in one place or distributed in multiple network units. Some or all of the units may be selected according to actual needs to achieve the purpose of the solution of the present embodiment.

In addition, respective functional units in respective embodiments of the present disclosure may be integrated into one processing unit, each unit may exist alone, or two or more units may be integrated into one unit.

If the function is implemented in the form of a software functional unit and sold or used as an independent product, the function may be stored in one computer-readable storage medium. Based on this understanding, the technical solution of the present disclosure, which is essential or contributes to the prior art, or a part of the technical solution, may be implemented in the form of a software product, and the computer software product is stored in one storage medium and includes a few instructions to cause one computer device (which may be a personal computer, a server, a network device, or the like) to perform all or part of the operations of the method described in each embodiment of the present disclosure. The storage medium described above includes various media capable of storing program codes, such as a USB memory, a mobile hard disk, a read-only memory (ROM), a random access memory (RAM), a magnetic disk, a CD-ROM, or the like.

The above descriptions are only specific implementations of the present disclosure, but the protection scope of the present disclosure is not limited to this. Any modification or substitution easily conceived of by those skilled familiar with the technical field within the technical scope disclosed in the present disclosure should be covered within the protection scope of the present disclosure. Therefore, the protection scope of the present disclosure should be based on the protection scope of the claims.

## Claims

1. A method for wireless communication, comprising: releasing, by a terminal device, a resource associated with a first parameter, in response to a timer corresponding to a first timing advance group (TAG) expiring, wherein the first parameter is associated with the first TAG, and the first parameter comprises at least one of: a first transmission configuration indication (TCI) state, first spatial relation information, a first control resource set pool index, and a first uplink radio resource control (RRC) parameter.

2. The method according to claim 1, wherein the first TCI state comprises a first uplink TCI state or a first joint TCI state.

3. The method according to claim 2, wherein the resource associated with the first parameter comprises a first physical uplink control channel (PUCCH) resource or first PUCCH resource group, wherein the first PUCCH resource or first PUCCH resource group is a PUCCH resource or PUCCH resource group that the first TCI state is applied to.

4. The method according to claim 3, wherein only the first TCI state is applied to the first PUCCH resource or first PUCCH resource group.

5. The method according to claim 3, wherein the first PUCCH resource or first PUCCH resource group is a PUCCH resource or PUCCH resource group that the first TCI state and the second TCI state are applied to.

6. The method according to any one of claims 2 to 5, wherein the resource associated with the first parameter comprises a sounding reference signal (SRS) resource or SRS resource set associated with the first TCI state, and the SRS resource or SRS resource set is configured to track an uplink signal indicated by the first TCI state.

7. The method according to any one of claims 2 to 6, wherein the resource associated with the first parameter comprises a pre-configured physical uplink shared channel PUSCH resource that the first TCI state is applied to.

8. The method according to claim 7, wherein the pre-configured PUSCH resource comprises a PUSCH resource carrying a configured uplink grant and/or a PUSCH resource for semi-persistent channel state information CSI reporting.

9. The method according to any one of claims 2 to 8, wherein the first TCI state comprises a first downlink TCI state or a first j oint TCI state.

10. The method according to claim 9, wherein the resource associated with the first parameter comprises an HARQ buffer corresponding to a physical downlink shared channel (PDSCH) that the first TCI state is applied to.

11. The method according to claim 9 or 10, wherein the resource associated with the first parameter comprises a pre-configured PDSCH resource that the first TCI state is applied to.

12. The method according to claim 11, wherein the pre-configured PDSCH resource comprises a configured downlink assignment.

13. The method according to any one of claims 1 to 12, wherein the first spatial relation information comprises first PUCCH spatial relation information.

14. The method according to claim 13, wherein the resource associated with the first parameter comprises a second PUCCH resource or second PUCCH resource group, wherein the second PUCCH resource or second PUCCH resource group is a PUCCH resource or PUCCH resource group associated with the first PUCCH spatial relation information.

15. The method according to claim 14, wherein the second PUCCH resource or second PUCCH resource group is only associated with the first PUCCH spatial relation information; or
the second PUCCH resource or second PUCCH resource group is a PUCCH resource or PUCCH resource group associated with the first PUCCH spatial relation information and the second PUCCH spatial relation information.

16. The method according to any one of claims 1 to 15, wherein the first spatial relation information comprises first SRS spatial relation information.

17. The method according to claim 16, wherein the resource associated with the first parameter comprises an SRS resource or SRS resource associated with the first SRS spatial relation information.

18. The method according to claim 16 or 17, wherein the resource associated with the first parameter comprises a pre-configured PUSCH resource associated with the SRS resource associated with the first SRS spatial relation information.

19. The method according to claim 18, wherein the pre-configured PUSCH resource comprises a PUSCH resource carrying a configured uplink grant and/or a PUSCH resource for semi-persistent channel state information (CSI) reporting.

20. The method according to any one of claims 1 to 19, wherein the resource associated with the first parameter comprises a PUCCH resource associated with the first uplink RRC parameter or the first control resource set pool index.

21. The method according to any one of claims 1 to 20, wherein the resource associated with the first parameter comprises a pre-configured PUSCH resource associated with the first uplink RRC parameter or the first control resource set pool index.

22. The method according to claim 21, wherein the pre-configured PUSCH resource associated with the first uplink RRC parameter or the first control resource set pool index comprises at least one of:
a type 1 configured grant CG PUSCH resource associated with the first uplink RRC parameter or the first control resource set pool index, a type 2 CG PUSCH resource associated with the first uplink RRC parameter or the first control resource set pool index, or a type 2 CG PUSCH resource activated by downlink control information (DCI) associated with the first uplink RRC parameter or the first control resource set pool index.

23. The method according to any one of claims 1 to 22, wherein the resource associated with the first parameter comprises an SRS resource or SRS resource set associated with the first uplink RRC parameter or the first control resource set pool index.

24. The method according to any one of claims 1 to 23, wherein the resource associated with the first parameter comprises an HARQ buffer corresponding to a PDSCH scheduled by DCI associated with the first uplink RRC parameter or the first control resource set pool index.

25. The method according to any one of claims 1 to 24, wherein the resource associated with the first parameter comprises a pre-configured PDSCH resource associated with the first uplink RRC parameter or the first control resource set pool index.

26. The method according to claim 25, wherein the pre-configured PDSCH resource comprises a type 2 configured downlink assignment.

27. The method according to any one of claims 1 to 26, wherein a serving cell of the terminal device is associated with at least two TAGs, a first TAG being one of the at least two TAGs, and releasing, by the terminal device, the resource associated with the first parameter, in response to the timer corresponding to the first TAG expiring, comprises:
releasing, by the terminal device, only a resource associated with the first parameter associated with the first TAG, in response to the timer corresponding to the first TAG expiring and a timer corresponding to a TAG other than the first TAG in the at least two TAGs not expiring.

28. The method according to any one of claims 1 to 27, wherein the first TAG is a primary timing advance group (PTAG) in the at least two TAGs.

29. A method for wireless communication, comprising:
transmitting, by a network device, first configuration information to a terminal device, wherein the first configuration information is configured to configure a first association, and the first association is an association between a timing advance group (TAG) and at least one of following parameters:
a transmission configuration indication (TCI) state, spatial relation information, a control resource set pool index, and an uplink radio resource control (RRC) parameter.

30. The method according to claim 29, wherein the first association comprises an association between a first TCI state and a first parameter, wherein the first parameter comprises at least one of: a first TCI state, first spatial relation information, a first control resource set pool index, and a first uplink RRC parameter.

31. The method according to claim 30, wherein the first TCI state comprises a first uplink TCI state or a first joint TCI state.

32. The method according to claim 30 or 31, wherein the first TCI state comprises a first downlink TCI state or a first joint TCI state.

33. The method according to any one of claims 30 to 32, wherein the first spatial relation information comprises first physical uplink control channel (PUCCH) spatial relation information and/or first sounding reference signal (SRS) spatial relation information.

34. The method according to any one of claims 29 to 33, wherein the first configuration information is transmitted via at least one of following signaling:
a system message, RRC signaling, a media access control (MAC) control element (CE), and downlink control information (DCI).

35. A terminal device, comprising:
a processing unit, configured to release a resource associated with a first parameter, in response to a timer corresponding to a first timing advance group (TAG) expiring, wherein the first parameter is associated with the first TAG, and the first parameter comprises at least one of: a first transmission configuration indication (TCI) state, first spatial relation information, a first control resource set pool index, and a first uplink radio resource control (RRC) parameter.

36. The terminal device according to claim 35, wherein the first TCI state comprises a first uplink TCI state or a first joint TCI state.

37. The terminal device according to claim 36, wherein the resource associated with the first parameter comprises a first physical uplink control channel (PUCCH) resource or first PUCCH resource group, wherein the first PUCCH resource or first PUCCH resource group is a PUCCH resource or PUCCH resource group that the first TCI state is applied to.

38. The terminal device according to claim 37, wherein only the first TCI state is applied to the first PUCCH resource or first PUCCH resource group.

39. The terminal device according to claim 37, wherein the first PUCCH resource or first PUCCH resource group is a PUCCH resource or PUCCH resource group that the first TCI state and the second TCI state are applied to.

40. The terminal device according to any one of claims 36 to 39, wherein the resource associated with the first parameter comprises a sounding reference signal (SRS) resource or SRS resource set associated with the first TCI state, and the SRS resource or SRS resource set is configured to track an uplink signal indicated by the first TCI state.

41. The terminal device according to any one of claims 36 to 40, wherein the resource associated with the first parameter comprises a pre-configured physical uplink shared channel PUSCH resource that the first TCI state is applied to.

42. The terminal device according to claim 41, wherein the pre-configured PUSCH resource comprises a PUSCH resource carrying a configured uplink grant and/or a PUSCH resource for semi-persistent channel state information CSI reporting.

43. The terminal device according to any one of claims 36 to 42, wherein the first TCI state comprises a first downlink TCI state or a first joint TCI state.

44. The terminal device according to claim 43, wherein the resource associated with the first parameter comprises an HARQ buffer corresponding to a physical downlink shared channel (PDSCH) that the first TCI state is applied to.

45. The terminal device according to claim 43 or 44, wherein the resource associated with the first parameter comprises a pre-configured PDSCH resource that the first TCI state is applied to.

46. The terminal device according to claim 45, wherein the pre-configured PDSCH resource comprises a configured downlink assignment.

47. The terminal device according to any one of claims 35 to 46, wherein the first spatial relation information comprises first PUCCH spatial relation information.

48. The terminal device according to claim 47, wherein the resource associated with the first parameter comprises a second PUCCH resource or second PUCCH resource group, wherein the second PUCCH resource or second PUCCH resource group is a PUCCH resource or PUCCH resource group associated with the first PUCCH spatial relation information.

49. The terminal device according to claim 48, wherein the second PUCCH resource or second PUCCH resource group is only associated with the first PUCCH spatial relation information; or
the second PUCCH resource or second PUCCH resource group is a PUCCH resource or PUCCH resource group associated with the first PUCCH spatial relation information and the second PUCCH spatial relation information.

50. The terminal device according to any one of claims 35 to 49, wherein the first spatial relation information comprises first SRS spatial relation information.

51. The terminal device according to claim 50, wherein the resource associated with the first parameter comprises an SRS resource or SRS resource associated with the first SRS spatial relation information.

52. The terminal device according to claim 50 or 51, wherein the resource associated with the first parameter comprises a pre-configured PUSCH resource associated with the SRS resource associated with the first SRS spatial relation information.

53. The terminal device according to claim 52, wherein the pre-configured PUSCH resource comprises a PUSCH resource carrying a configured uplink grant and/or a PUSCH resource for semi-persistent channel state information (CSI) reporting.

54. The terminal device according to any one of claims 35 to 53, wherein the resource associated with the first parameter comprises a PUCCH resource associated with the first uplink RRC parameter or the first control resource set pool index.

55. The terminal device according to any one of claims 35 to 54, wherein the resource associated with the first parameter comprises a pre-configured PUSCH resource associated with the first uplink RRC parameter or the first control resource set pool index.

56. The terminal device according to claim 55, wherein the pre-configured PUSCH resource associated with the first uplink RRC parameter or the first control resource set pool index comprises at least one of:
a type 1 configured grant CG PUSCH resource associated with the first uplink RRC parameter or the first control resource set pool index, a type 2 CG PUSCH resource associated with the first uplink RRC parameter or the first control resource set pool index, or a type 2 CG PUSCH resource activated by downlink control information (DCI) associated with the first uplink RRC parameter or the first control resource set pool index.

57. The terminal device according to any one of claims 35 to 56, wherein the resource associated with the first parameter comprises an SRS resource or SRS resource set associated with the first uplink RRC parameter or the first control resource set pool index.

58. The terminal device according to any one of claims 35 to 57, wherein the resource associated with the first parameter comprises an HARQ buffer corresponding to a PDSCH scheduled by DCI associated with the first uplink RRC parameter or the first control resource set pool index.

59. The terminal device according to any one of claims 35 to 58, wherein the resource associated with the first parameter comprises a pre-configured PDSCH resource associated with the first uplink RRC parameter or the first control resource set pool index.

60. The terminal device according to claim 59, wherein the pre-configured PDSCH resource comprises a type 2 configured downlink assignment.

61. The terminal device according to any one of claims 35 to 60, wherein a serving cell of the terminal device is associated with at least two TAGs, a first TAG being one of the at least two TAGs, and releasing, by the terminal device, the resource associated with the first parameter, in response to the timer corresponding to the first TAG expiring, comprises:
releasing, by the terminal device, only a resource associated with the first parameter associated with the first TAG, in response to the timer corresponding to the first TAG expiring and a timer corresponding to a TAG other than the first TAG in the at least two TAGs not expiring.

62. The terminal device according to any one of claims 35 to 61, wherein the first TAG is a primary timing advance group (PTAG) in the at least two TAGs.

63. A network device, comprising:
a communication unit, configured to transmit first configuration information to a terminal device, wherein the first configuration information is configured to configure a first association, and the first association is an association between a timing advance group (TAG) and at least one of following parameters:
a transmission configuration indication (TCI) state, spatial relation information, a control resource set pool index, and an uplink radio resource control (RRC) parameter.

64. A terminal device, comprising: a processor and a memory, wherein the memory is configured to store a computer program, and the processor is configured to invoke and execute the computer program stored in the memory to implement the method according to any one of claims 1 to 28.

65. A network device, comprising: a processor and a memory, wherein the memory is configured to store a computer program, and the processor is configured to invoke and execute the computer program stored in the memory to implement the method according to any one of claims 29 to 34.

66. A chip, comprising: a processor configured to invoke and execute a computer program from a memory, to cause a device equipped with the chip to implement the method according to any one of claims 1 to 28, or the method according to any one of claims 29 to 34.

67. A computer-readable storage medium, configured to store a computer program, the computer program causing a computer to implement the method according to any one of claims 1 to 28, or the method according to any one of claims 29 to 34.

68. A computer program product, comprising a computer program instruction, the computer program instruction causing a computer to implement the method according to any one of claims 1 to 28, or the method according to any one of claims 29 to 34.

69. A computer program, causing a computer to implement the method according to any one of claims 1 to 28, or the method according to any one of claims 29 to 34.

**100**

FIG. 1

| TAG ID | Timing Advance Command | Oct 1 |

FIG. 2

| R | R | R | R | Timing Advance Command | Oct 1 |
| Timing Advance Command | | | | | Oct 2 |

FIG. 3

| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

FIG. 4

Downlink frame *i*

Uplink frame *i*

$$(N_{TA} + N_{TA,offset}) * T_C$$

FIG. 5

*CORESETPollIndex* 0

*CORESETPollIndex* 1

PDCCH 1
PDSCH 1
PUSCH 1

PDCCH 2
PDSCH 2
PUSCH 2

TRP0

UE

TRP1

FIG. 6

200

| TERMINAL DEVICE | FIRST NETWORK DEVICE |

S201, FIRST CONFIGURATION INFORMATION, TO CONFIGURE AN ASSOCIATION BETWEEN FIRST TAG AND FIRST PARAMETER.

S210, WHEN TIMER CORRESPONDING TO FIRST TAG EXPIRES, RELEASE RESOURCE ASSOCIATED WITH FIRST PARAMETER

FIG. 7

TERMINAL DEVICE
400

PROCESSING UNIT 410

FIG. 8

NETWORK DEVICE
500

COMMUNICATION
UNIT 510

FIG. 9

COMMUNICATION
DEVICE 600

MEMORY
620

PROCESSOR
610

TRANSCEIVER
630

FIG. 10

CHIP 700

INPUT
INTERFACE
730

PROCESSOR
710

MEMORY 720

OUTPUT
INTERFACE
740

FIG. 11

COMMUNICATION
SYSTEM 900

910

TERMINAL
DEVICE

NETWORK
DEVICE

920

FIG. 12

## INTERNATIONAL SEARCH REPORT

| International application No. |
| --- |
| **PCT/CN2023/094014** |

### A. CLASSIFICATION OF SUBJECT MATTER

H04W76/38(2018.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, CNKI, ENTXT, VEN, 3GPP: 释放, 定时器, 超时, 参数, 关联, 映射, TAG, 定时提前, TCI, RRC, PUCCH, SRS, Release, Timer, Timeout, Parameter, Association, Mapping, Timing Advance

### C. DOCUMENTS CONSIDERED TO BE RELEVANT

| Category* | Citation of document, with indication, where appropriate, of the relevant passages | Relevant to claim No. |
| --- | --- | --- |
| X | JP 2015130691 A (FUJITSU LTD.) 16 July 2015 (2015-07-16) description, paragraphs [0003]-[0016] | 1-69 |
| A | JP 2012253801 A (FUJITSU LTD.) 20 December 2012 (2012-12-20) entire document | 1-69 |
| A | CN 112655242 A (GUANGDONG OPPO MOBILE COMMUNICATIONS CO., LTD.) 13 April 2021 (2021-04-13) entire document | 1-69 |
| A | CN 109391966 A (HUAWEI TECHNOLOGIES CO., LTD.) 26 February 2019 (2019-02-26) entire document | 1-69 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 September 2023** | **21 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094014**

| Patent document cited in search report | | | Publication date (day/month/year) | Patent family member(s) | | | Publication date (day/month/year) |
|---|---|---|---|---|---|---|---|
| JP | 2015130691 | A | 16 July 2015 | JP | 6408402 | B2 | 17 October 2018 |
| JP | 2012253801 | A | 20 December 2012 | JP | 5223990 | B2 | 26 June 2013 |
| CN | 112655242 | A | 13 April 2021 | EP | 3836614 | A1 | 16 June 2021 |
| | | | | EP | 3836614 | A4 | 22 September 2021 |
| | | | | WO | 2020057044 | A1 | 26 March 2020 |
| | | | | US | 2021195682 | A1 | 24 June 2021 |
| | | | | EP | 4033808 | A1 | 27 July 2022 |
| | | | | WO | 2020056880 | A1 | 26 March 2020 |
| CN | 109391966 | A | 26 February 2019 | EP | 3573364 | A1 | 27 November 2019 |
| | | | | EP | 3573364 | A4 | 06 May 2020 |
| | | | | EP | 3573364 | B1 | 31 May 2023 |
| | | | | WO | 2019029646 | A1 | 14 February 2019 |
| | | | | US | 2020029293 | A1 | 23 January 2020 |
| | | | | US | 11147033 | B2 | 12 October 2021 |

Form PCT/ISA/210 (patent family annex) (July 2022)